# EUROPÄISCHE PATENTSCHRIFT

(11) **EP 2 092 911 B1**
(45) Veröffentlichungstag und Bekanntmachung des Hinweises auf die Patenterteilung: **02.05.2012**
(21) Anmeldenummer: 09002425.8
(22) Anmeldetag: 20.02.2009
(51) Int. Cl.: A46B 15/00, A46B 17/00, A61C 19/00

(54) **Vorrichtung zur visuellen Anzeige der Putzzeitintervalle für zu reinigende Teilbereiche eines menschlichen Gebisses**
Device for visually displaying cleaning intervals for sections of the human dentition to be cleaned
Dispositif d'affichage visuel des intervalles de temps de nettoyage de sections d'une dentition humaine à nettoyer

(30) Priorität: 20.02.2008 DE 202008002394 U; 20.06.2008 DE 102008029481
(43) Veröffentlichungstag der Anmeldung: 26.08.2009
(73) Patentinhaber: Kocks, Ingeborg, 47802 Krefeld (DE); Illing, Einhardt, 47802 Krefeld (DE)
(72) Erfinder: Illing, Einhardt, 47802 Krefeld (DE)
(74) Vertreter: DR. STARK & PARTNER

(56) Entgegenhaltungen:
- WO-A-2007/122491
- US-A1- 2007 261 185

## Beschreibung

Die Erfindung betrifft eine Vorrichtung zur visuellen Anzeige der Putzzeitintervalle für zu reinigende Teilbereiche eines menschlichen Gebisses, gemäß dem Oberbegriff des Anspruchs 1.

Eine derartige Vorrichtung ist beispielsweise aus der WO-A-2007/122 491 bekannt.

Aus der Praxis sind auch Vorrichtungen zur visuellen Anzeige der Putzzeitintervalle für ein zu reinigendes menschlichen Gebiss beispielsweise in Form einer Sanduhr mit einer Laufzeit von ca. 2 oder 3 Minuten bekannt.

Nachteilig hierbei ist, dass der Nutzer die Gesamtputzzeit möglichst gleichmäßig auf die verschiedenen Teilbereiche seines Gebisses aufteilen muss, damit auch alle Zähne und deren verschiedene Zahnflächen ausreichend gereinigt werden.

Aufgabe der Erfindung ist es, die vorgenannten Nachteile zu vermeiden und eine Vorrichtung der eingangs genannten Art anzugeben, mit der eine visuelle Anzeige der Putzzeitintervalle für die verschiedenen zu reinigenden Teilbereiche eines menschlichen Gebisses möglich ist.

Diese Aufgabe wird gemäß dem kennzeichnenden Teil des Anspruchs 1 gelöst.

Hierdurch ist eine zeitlich gesteuerte Visualisierung der jeweils relevanten Putzzeitintervalle für die einzelnen Kiefersegmente möglich, so dass für jedes Kiefersegment eine Putzzeitdauer leicht und einfach anzeigbar ist.

Erfindungsgemäß kann die Gruppierung der benachbarten Zähne zu Kiefersegmenten funktional gebildet sein, so dass eine besonders effektive Reinigung durch systematisch sinnvolle Zusammenfassung der in einem Teilputzvorgang zu reinigenden Zähne gegeben ist. Diese kann sich dabei auch an der Handhabung der Zahnbürste, insbesondere bei üblichen und/oder zahnärztlich empfohlenen Putztechniken, orientieren.

Weiterhin können für die Anzeige der unterschiedlichen Darstellungen "noch ungereinigt" bzw. "gerade zu reinigen" bzw. "bereits gereinigt" Leuchtdioden oder insbesondere hinterleuchtete bzw. hintergrundbeleuchtete LCD's vorgesehen sein, die entweder deaktiviert bei "noch ungereinigt" sind, in blinkendem Betriebsmodus mit insbesondere variabler Blinkfrequenz bei "gerade zu reinigen" angesteuert sind oder aber als dauerhaft aktiviert mit insbesondere zeitlich ansteigender Intensität (der Anzeige) bei "bereits gereinigt" ansteuerbar sind, so dass eine gut erkennbare und deutlich unterscheidbare Visualisierung für die verschieden Anzeigemodi gegeben ist. Damit wird ausgehend von einer schlichten Visualisierung, insbesondere lediglich durch eine Liniendarstellung für die einzelnen Zähne und/oder die verschiedenen Zahnflächen, über eine teilweise blinkende oder leuchtende Darstellung bis hin zu einer vollfarbigen Darstellung aller Zähne und Zahnflächen bei beendetem Putzvorgang ein leicht erkennbarer Ablauf vorgegeben, dem der Benutzer beim Zähneputzen einfach folgen kann.

Dabei kann die Anzeige der unterschiedlichen Darstellungen "gerade zu reinigen" bzw. "bereits gereinigt" für die verschiedenen Kiefersegmente in unterschiedlichen Färbungen ausgebildet sein, so dass neben der verbesserten Unterscheidbarkeit auch die Lehren der Farbenpsychologie berücksichtigt sein können. Insoweit kann die Färbung der Außenflächen der Backenzähne, insbesondere beim Oberkiefer, in bläulicher Tönung gehalten sein, während die Färbung der Innenflächen der Backenzähne, insbesondere beim Oberkiefer, in grünlicher Tönung gehalten sein kann.

Die Färbung der Innen- und/oder Außenflächen der Schneide - und Eckzähne kann in rosafarbener Tönung ausgebildet sein.

Auch kann die Färbung der Außenflächen der Backenzähne, insbesondere beim Unterkiefer, in rötlicher Tönung gehalten sein, während die Färbung der Innenflächen der Backenzähne, insbesondere beim Unterkiefer, in lachsfarbener Tönung gehalten sein kann.

Vorteilhafterweise kann für die Signalisierung des zeitlichen Fortschritts eines einzelnen Putzbereiches eine Tonausgabeeinrichtung vorgesehen sein sowie eine Steuereinrichtung, welche die Ausgabe eines Tonsignals bei Annäherung an das Ende und/oder bei Erreichen des Endes eines Putzintervalls steuert, so dass einerseits eine Information über das bevorstehende Ende eines Putzzeitintervalls als Motivation dienen kann und andererseits eine verstärkte Aufmerksamkeit für die Anzeige zur Erkennung einer dann neu beginnenden Visualisierung eines anderen Kiefersegmentes erzielbar ist.

Im Folgenden wird ein in der Zeichnung dargestelltes Ausführungsbeispiel der Erfindung erläutert. Es zeigen:
- Fig. 1: Eine Seitenansicht einer erfindungsgemäßen Vorrichtung in zusammengeklapptem Zustand,
- Fig. 2: eine Draufsicht auf den Gegenstand nach Fig. 1,
- Fig. 3: eine Draufsicht auf den Gegenstand nach Fig. 1 in ausgeklapptem Zustand mit visuellen Dar- stellungen für noch ungereinigte Zahnflächen, und
- Fig. 4: eine Draufsicht auf den Gegenstand nach Fig. 1 in aufgeklapptem Zustand mit visuellen Dar- stellungen für bereits gereinigte Zahnflächen.

In allen Figuren werden für gleiche bzw. gleichartige Bauteile übereinstimmende Bezugszeichen verwendet.

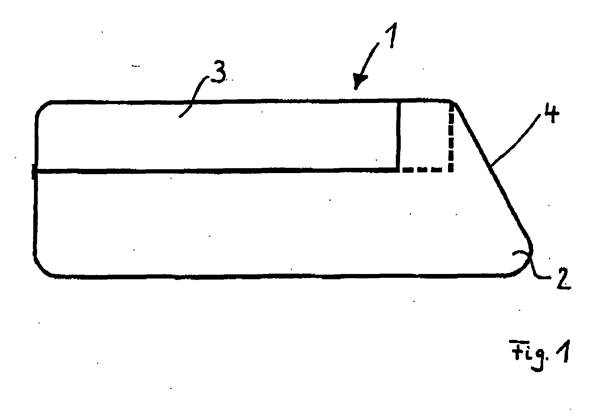

Fig. 1 zeigt eine erfindungsgemäße Vorrichtung 1, welche ein Gehäuse mit einem Unterteil 2 und ein gelenkig verschwenkbar daran angebrachtes und zwischen einer auf- und einer zugeklappten Position verschwenkbares Oberteil 3 umfasst.

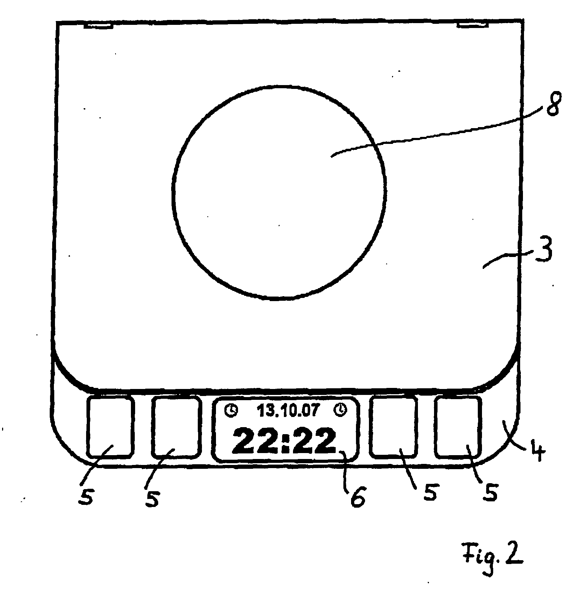

Wie aus Fig. 2 ersichtlich, kann das Unterteil 2 insbesondere in einem abgeschrägten Kantenbereich 4 Bedienelemente 5, insbesondere in Form von Knöpfen oder Schaltern sowie eine Statusanzeige 6 aufweisen. Die Statusanzeige 6 kann auch zur Anzeige von Uhrzeit/Datum ausgebildet sein. Die Außenseite des Oberteils 3 ist mit einer als Lautsprecher 8 ausgebildeten akustischen Signaleinrichtung versehen.

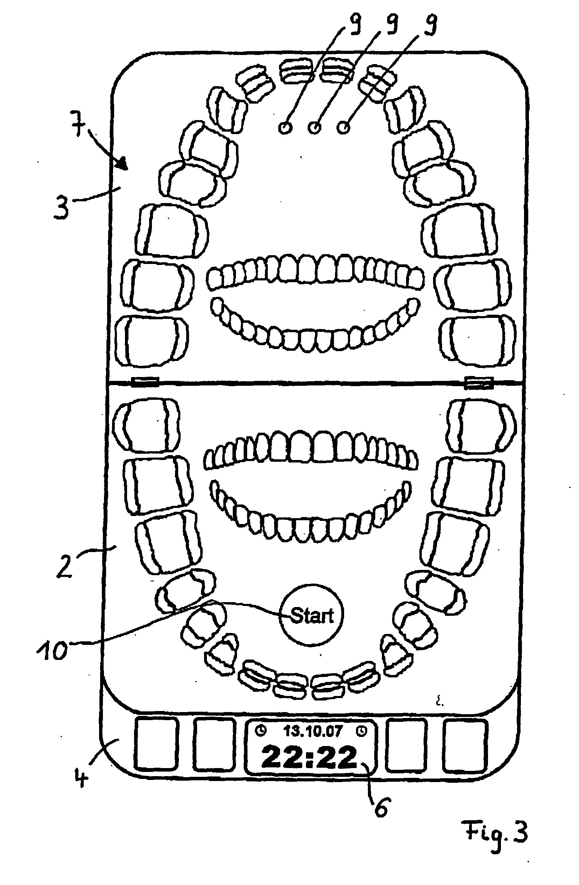

Fig. 3 zeigt die erfindungsgemäße Vorrichtung 1 mit aufgeklapptem Oberteil 3. Es ist eine Anzeigeeinrichtung 7 vorgesehen, die jeweils teilweise in dem Oberteil 3 und dem Unterteil 2 angeordnet ist. Der im Oberteil 3 vorgesehene Teilbereich der Anzeigeeinrichtung 7 zeigt stilisiert einen Oberkiefer in einer in etwa U-förmig ausgebildeten Draufsicht, wobei die Zähne jeweils in die verschiedenen Zahnflächen (Innenfläche, Kaufläche, Außenfläche) unterteilt dargestellt sind. Alternativ können die Schneidezähne auch lediglich durch Innen- und Außenflächen dargestellt sein, wobei dieses Ansfuhrungsbeispiel nicht Teil der beanspruchten Erfindung ist. Zwischen den Schenkeln der U-förmig ausgebildeten Darstellung des Oberkiefers sind die Innenflächen der Zähne von Oberkiefer und Unterkiefer übereinander dargestellt.

Der im Unterteil 2 vorgesehene Teilbereich der Anzeigeeinrichtung 7 zeigt stilisiert einen Unterkiefer in einer in etwa U-förmig ausgebildeten Draufsicht, wobei die Zähne jeweils in die verschiedenen Zahnflächen (Innenfläche, Kaufläche, Außenfläche) unterteilt dargestellt sind. Zwischen den Schenkeln der U-förmig ausgebildeten Darstellung des Oberkiefers sind die Außenflächen der Zähne von Oberkiefer und Unterkiefer übereinander dargestellt.

Für die Gesamtputzzeit können verschiedene Voreinstellungen (Standardzeit, verkürzte Putzzeit oder verlängerte Putzzeit) über zumindest einen, im dargestellten Ausführungsbeispiel drei Indikatoranzeigen 9 einstellbar sein, beispielsweise als Standardzeit ca. 210 Sekunden und eine kürzere Putzzeit von ca. 140 Sekunden sowie eine längere Putzzeit von ca. 280 Sekunden. Dementsprechend können die einzelnen Putzintervalle für die unterschiedlichen Zahnflächen (Innen-, Außen- und Kauflächen) der verschiedenen Kiefersegmente (links, rechts und vorne) jeweils ca. 10, 15 oder 20 Sekunden betragen. Dabei können die jeweiligen Putzintervalle für unterschiedliche Kiefersegmente einheitlich oder auch verschieden lang ausgebildet sein.

Vorzugsweise kann das Gerät als eine spritzwassergeschützte und insbesondere auch wasserdichte Ausführung ausgebildet sein. Eine automatische Abschaltfunktion nach Abschluss eines gesamten Putzzyklus kann ebenfalls integriert sein. Durch eine insbesondere als kombinierte Start-/Stopptaste 10 ausgebildete Stoppfunktion kann der Ablauf auch benutzerseitig abgebrochen werden.

Vorzugsweise kann auch eine Weckfunktion mit vorprogrammierten und/oder frei einstellbaren Weckzeiten integriert sein.

Die nicht eingeschaltete Vorrichtung 1 gemäß Fig. 3 zeigt das menschliche Gebiss mit allen Zähnen in einer weitgehend naturgetreu ausgebildeten Darstellung. Nach Aktivierung der Vorrichtung 1 können die Funktionsbereiche des Gebisses in beliebiger Reihenfolge und in beliebigen Farben aktiviert werden. Vorzugsweise können warme Farbtöne im Unterkiefer und kühle Farbtöne im Oberkiefer vorgesehen sein. Die Abfolge der Putzsequenzen kann vom Unterkiefer zum Oberkiefer gehen, wobei die Reihenfolge der Zahnflächen im Unterkiefer von der Außenfläche über die Kaufläche zu der Innenfläche der Zähne abfolgt, wohingegen im Oberkiefer mit der Innenflächen der Zähne begonnen wird und über die Kaufläche zu der Außenfläche abfolgt. Durch die farbige Darstellung der Zähne kann beim Benutzer eine Vorstellung erzeugt werden, dass die Zähne nicht mit zumeist verstärktem Krafteinsatz geputzt und geschrubbt werden, sondern stattdessen in den durch die Vorrichtung 1 angezeigten Farben angemalt werden. Somit wird zum einen eine sanftere Putztechnik erreicht und auch die Sorgfalt steigt, da die gesamten Zahnflächen in Gedanken "angemalt" werden sollen und keine nicht colorierten Restflächen verbleiben sollen.

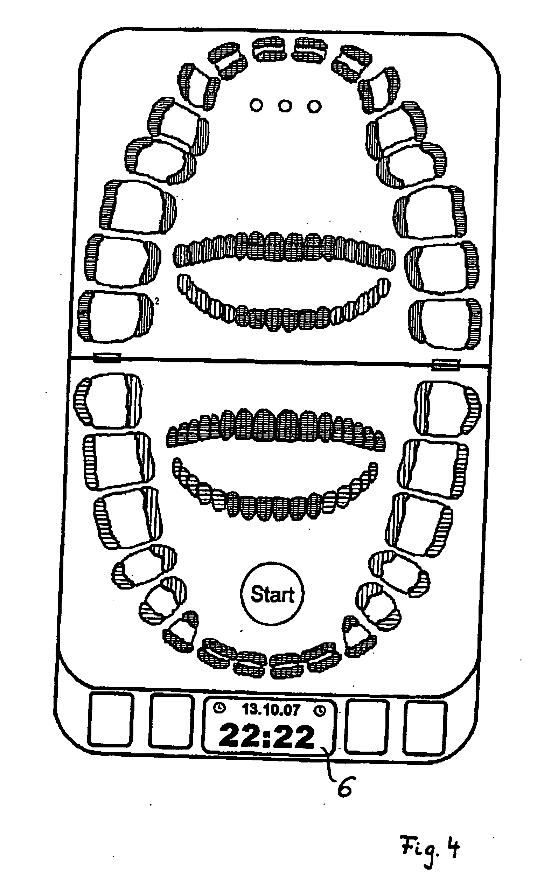

In der Darstellung gemäß Fig. 4 sind die verschiedenen Farbzuordnungen durch unterschiedliche Schraffierungen etc. dargestellt.

## Patentansprüche

1. Vorrichtung (1) zur visuellen Anzeige der Putzzeitintervalle für zu reinigende Teilbereiche eines menschlichen Gebisses, wobei eine Anzeigeeinrichtung (7) vorgesehen ist, auf welcher die Zähne des menschlichen Oberkiefers und Unterkiefers dargestellt und jeweils in unterschiedliche Kiefersegmente, nämlich links, rechts und vorne, mit jeweils mehreren aneinander angrenzenden Zähnen eingeteilt sind, und die Anzeigeeinrichtung (7) visuell unterschiedliche Darstellungen für noch ungereinigte Zahnflächen, für in der Reinigungsphase befindliche Zahnflächen und für bereits gereinigte Zahnflächen umfasst, **dadurch gekennzeichnet,dass** eine Steuereinrichtung vorgesehen ist, welche für die chronologisch nacheinander erfolgende Ansteuerung der Anzeigeeinrichtung (7) für die unterschiedlichen Zahnflächen der Segmente von Unterkiefer und Oberkiefer jeweils wechselnd von "noch ungereinigt" zunächst in "gerade zu reinigen" und anschließend in "bereits gereinigt" ausgebildet ist, wobei die Darstellung der einzelnen Zähne wiederum jeweils in Zahnaußenfläche, Zahnkaufläche und Zahninnenfläche unterteilt ist.

2. Vorrichtung (1) nach Anspruch 1, **dadurch gekennzeichnet, dass** für die Anzeige der unterschiedlichen Darstellungen "noch ungereinigt" bzw. "gerade zu reinigen" bzw. "bereits gereinigt" Leuchtdioden oder insbesondere hinterleuchtete LCD's vorgesehen sind, die entweder deaktiviert, in blinkendem Betriebsmodus mit insbesondere variabler Blinkfrequenz oder aber als dauerhaft aktiviert mit insbesondere zeitlich ansteigender Intensität ansteuerbar sind.

3. Vorrichtung (1) nach einem der vorhergehenden Ansprüche, **dadurch gekennzeichnet, dass** die Anzeige der unterschiedlichen Darstellungen "gerade zu reinigen" bzw. "bereits gereinigt" für die verschiednen Kiefersegmente in unterschiedlichen Färbungen ausgebildet ist.

4. Vorrichtung (1) nach einem der vorhergehenden Ansprüche, **dadurch gekennzeichnet, dass** für die Signalisierung des zeitlichen Fortschritts eines einzelnen Putzbereiches eine Tonausgabeeinrichtung (8) vorgesehen ist sowie eine Steuereinrichtung, welche die Ausgabe eines Tonsignals bei Annäherung an das Ende und/oder bei Erreichen des Endes eines Putzintervalls steuert.

## Claims

1. Apparatus (1) for visually displaying the cleaning intervals for sections of the human dentition to be cleaned, wherein a display device (7) is provided, on which the teeth of the human upper jaw and lower jaw are displayed and are respectively divided into different jaw segments, namely left, right and front, each comprising multiple adjacent teeth, and the display device (7) has visually different representations for tooth surfaces that have not yet been cleaned, for tooth surfaces in the cleaning phase and for tooth surfaces that have already been cleaned, **characterised in that** a control device is provided which is designed to actuate the display device (7) chronologically in succession for the different tooth surfaces of the segments of lower jaw and upper jaw, in each case changing from "not yet cleaned" firstly to "being cleaned" and then to "already cleaned", wherein the representation of the individual teeth is in turn respectively divided into tooth outer surface, tooth biting surface and tooth inner surface.

2. Apparatus (1) according to claim 1, **characterised in that**, for displaying the different representations "not yet cleaned", "being cleaned" and "already cleaned", tight-emitting diodes or in particular backlit LCDs are provided which are either deactivated, activated in flashing mode with in particular a variable flashing rate or else constantly activated with in particular an intensity which increases over time.

3. Apparatus (1) according to one of the preceding claims, **characterised in that** the display of the different representations "being cleaned" and "already cleaned" is in different colours for the different jaw segments.

4. Apparatus (1) according to one of the preceding claims, **characterised in that**, in order to signal the temporal progress of an individual cleaning area, a sound-emitting device (8) is provided as well as a control device which controls the emission of a sound signal when approaching the end and/or upon reaching the end of a cleaning interval.

## Revendications

1. Dispositif (1) pour l'affichage visuel des intervalles de temps de nettoyage pour des zones partielles à nettoyer d'une dentition humaine, sachant qu'il est prévu une unité d'affichage (7) sur laquelle les dents de la mâchoire humaine supérieure et de la mâchoire humaine inférieure sont représentées et sont respectivement réparties en différents segments de mâchoire, à savoir à gauche, a droite et sur le devant, pourvus chacun de plusieurs dents adjacentes les unes aux autres, et sachant que l'unité d'affichage (7) comprend des représentations visuellement différentes pour des surfaces de dents non encore nettoyées, pour des surfaces de dents se trouvant en phase de nettoyage et pour des surfaces de dents déjà nettoyées, **caractérisé en ce qu'**il est prévu une unité de commande qui est conçue pour commander de manière chronologiquement successive l'unité d'affichage (7) pour les différentes surfaces de dents des segments de la mâchoire inférieure et de la mâchoire supérieure, en alternant chaque fois de « non encore nettoyé » à « à nettoyer maintenant » et enfin à « déjà nettoyé », sachant que la représentation des dents individuelles est elle-même chaque fois divisée en surface extérieure de dent, surface de mastication de dent et surface intérieure de dent.

2. Dispositif (1) selon la revendication 1, **caractérisé en ce que** des diodes électroluminescentes ou en particulier des affichages à cristaux liquides à rétroéclairage sont prévus pour l'affichage des différentes représentations « non encore nettoyé », « à nettoyer maintenant » et « déjà nettoyé », lesquels peuvent être commandés pour être soit désactivés, soit en mode de fonctionnement clignotant avec une fréquence de clignotement notamment variable, soit activés en continu avec une intensité notamment augmentant dans le temps.

3. Dispositif (1) selon l'une des revendications précédentes, **caractérisé en ce que** l'affichage des différentes réprésentations « à nettoyer maintenant et « déjà nettoyé », est réalisé dans des colorations différentes pour les différents segments de dents.

4. Dispositif (1) selon l'une des revendications précédentes, **caractérisé en ce qu'**il est prévu une unité (8) de délivrance de signaux sonores pour signaler la progression dans le temps d'une zone de nettoyage individuelle, ainsi qu'une unité de commande qui commande la délivrance d'un signal sonore à l'approche de la fin et/ou à l'atteinte de la fin d'un intervalle de nettoyage.
